# EUROPEAN PATENT APPLICATION

(11) **EP 3 961 961 A1**
(43) Date of publication of application: **02.03.2022**
(21) Application number: 21194428.5
(22) Date of filing: 12.01.2018
(51) Int. Cl.: H04L 5/00, H04W 72/04

(54) **UPLINK DATA TRANSMISSION METHOD AND RELATED DEVICES**

(62) Divisional of application: 18899475.0
(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, 523860 (CN); SHI, Zhihua, Dongguan, 523860 (CN)
(74) Representative: Manitz Finsterwald Patent- und Rechtsanwaltspartnerschaft mbB

(57) **Abstract**

The embodiments of the disclosure provide an uplink data transmission method and a related device. The method includes that: User Equipment (UE) determines an uplink Bandwidth Part (BWP) for transmitting a Physical Uplink Shared Channel (PUSCH); the UE determines a PUSCH transmission parameter corresponding to the uplink BWP; and the UE transmits the PUSCH on the uplink BWP according to the at least one PUSCH transmission parameter. With adoption of the embodiments of the disclosure, PUSCH transmission flexibility may be improved.

## Description

### TECHNICAL FIELD

The disclosure relates to the technical field of communication, and particularly to an uplink data transmission method and a related device.

### BACKGROUND

In New Radio (NR), a carrier may include multiple Bandwidth Parts (BWPs). For a piece of User Equipment (UE), only one uplink BWP may be activated for uplink transmission at a moment. Similarly, only one downlink BWP may be activated for downlink transmission at a moment. The specific BWP presently activated for the UE is indicated through Downlink Control Information (DCI), and the BWP for transmission of the UE may be dynamically switched in multiple BWPs in a carrier. If Physical Uplink Shared Channel (PUSCH) transmission may be dynamically switched on multiple BWPs, how to configure a parameter(s) for transmission of a PUSCH is a technical problem required to be solved.

### SUMMARY

Embodiments of the disclosure provide an uplink data transmission method and a related device, which are adopted to improve SRS transmission flexibility.

According to a first aspect, the embodiments of the disclosure provide an uplink data transmission method, which may include the following operations.

UE determines an uplink BWP configured to transmit a PUSCH.

The UE determines at least one PUSCH transmission parameter corresponding to the uplink BWP.

The UE transmits the PUSCH on the uplink BWP according to the at least one PUSCH transmission parameter.

According to a second aspect, the embodiments of the disclosure provide UE, which may include a processing unit and a communication unit.

The processing unit may be configured to determine an uplink BWP configured to transmit a PUSCH.

The processing unit may further be configured to determine at least one PUSCH transmission parameter corresponding to the uplink BWP.

The processing unit may further be configured to transmit the PUSCH on the uplink BWP through the communication unit according to the at least one PUSCH transmission parameter.

According to a third aspect, the embodiments of the disclosure provide UE, which may include one or more processors, one or more memories, one or more transceivers and one or more programs, the one or more programs being stored in the memory and configured to be executed by the one or more processors and the programs including instructions for executing the steps in the method according to the first aspect.

According to a fourth aspect, the embodiments of the disclosure provide a computer-readable storage medium, which may store a computer program configured for electronic data exchange, the computer program enabling a computer to execute part or all of the steps described in any method according to the first aspect.

According to a fifth aspect, the embodiments of the disclosure provide a computer program product, which includes a non-transitory computer-readable storage medium storing a computer program. The computer program may be operated to enable a computer to execute part or all of the steps described in any method according to the first aspect. The computer program product may be a software installation package.

It can be seen that, in the disclosure, a network device may configure a set of PUSCH transmission parameters for each BWP of the UE at first; then, responsive to that the UE is dynamically switched to a certain BWP for PUSCH transmission, the UE may determine the at least one PUSCH transmission parameter corresponding to the BWP as the at least one PUSCH transmission parameter for PUSCH transmission; and finally, the UE transmits the PUSCH on the BWP on the basis of the at least one PUSCH transmission parameter corresponding to the BWP. In such a manner, different PUSCH transmission parameters may be adopted for PUSCH transmission on different BWPs, and PUSCH transmission flexibility is further improved.

These aspects or other aspects of the disclosure will become clearer and easier to understand through the following descriptions about the embodiments.

### BRIEF DESCRIPTION OF DRAWINGS

In order to describe the technical solutions in the embodiments of the disclosure or a background art more clearly, the drawings for descriptions about the embodiments of the disclosure or the background art will be described below.
FIG. 1 is an architecture diagram of a wireless communication system according to an embodiment of the disclosure.
FIG. 2 is a structure diagram of UE according to an embodiment of the disclosure.
FIG. 3 is a structure diagram of a network device according to an embodiment of the disclosure.
FIG. 4 is a flowchart of an uplink data transmission method according to an embodiment of the disclosure.
FIG. 5 is a structure diagram of another UE according to an embodiment of the disclosure.
FIG. 6 is a structure diagram of another UE according to an embodiment of the disclosure.

### DETAILED DESCRIPTION

The terms for the section Detailed Description of the disclosure are only adopted to explain specific embodiments of the disclosure and not intended to limit the disclosure.

Terms "first", "second", "third", "fourth" and the like in the specification, claims and drawings of the disclosure are not intended to describe a specific sequence but to distinguish different objects. In addition, terms "include" and "have" and any transformations thereof are intended to cover nonexclusive inclusions.

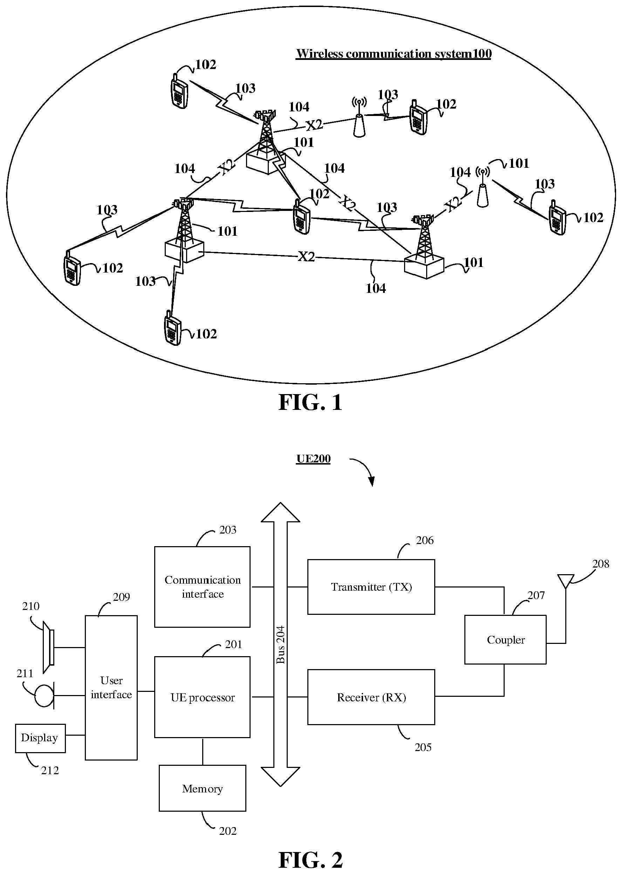

FIG. 1 illustrates a wireless communication system involved in the disclosure. The wireless communication system is not limited to a Long Term Evolution (LTE) system, or may be a future evolved 5th Generation (5G) system, an NR system, a Machine to Machine (M2M) system and the like. As illustrated in FIG. 1, the wireless communication system 100 may include one or more network devices 101 and one or more UEs 102.

Here, the network device 101 may be a base station, and the base station may be configured to communicate with the one or more UEs, or may be configured to communicate with one or more base stations with part of UE functions (for example, communication between a macro NodeB and a micro NodeB such as an Access Point (AP)). The base station may be a Base Transceiver Station (BTS) in a Time Division Synchronous Code Division Multiple Access (TD-SCDMA) system, or may be an Evolutional Node B (eNB) in the LTE system and a base station in the 5G system and the NR system. In addition, the base station may also be an AP, a Transmission Reception Point (TRP), a Central Unit (CU) or another network entity, and may include some or all of functions of the above network entities.

The UE 102 may be distributed in the entire wireless communication system 100. The UE may be static, or may be mobile. In some embodiments of the disclosure, the UE 102 may be a mobile device, a mobile station, a mobile unit, an M2M terminal, a wireless unit, a remote unit, a user agent, a mobile client or the like.

Specifically, the network device 101 may be configured to communicate with the UE 102 through a wireless interface 103 under control of a network device controller (not shown). In some embodiments, the network device controller may be a part of a core network, or may be integrated into the network device 101. A network device 101 may also directly or indirectly communicate with another network device 101 through a backhaul interface 104 (for example, an X2 interface).

In present discussions about NR, a carrier may include multiple BWPs. For a piece of UE 102, only one uplink BWP may be activated for uplink transmission at a moment. Only one downlink BWP may be activated for downlink transmission at a moment. The specific BWP presently activated for the UE 102 is indicated by the network device 101 through DCI, and the BWP for transmission of the UE 102 may be dynamically switched in multiple BWPs in a carrier. If PUSCH transmission may be dynamically switched on multiple BWPs, how to configure a parameter(s) for transmission of a PUSCH is a technical problem required to be solved.

It can be seen that, in the disclosure, a network device 101 may configure a set of PUSCH transmission parameters for each BWP of UE 102 at first; then, responsive to that the UE 102 is dynamically switched to a certain BWP for PUSCH transmission, the UE 102 may determine the at least one PUSCH transmission parameter corresponding to the BWP as at least one PUSCH transmission parameter for PUSCH transmission; and finally, the UE 102 transmits a PUSCH on the BWP on the basis of the at least one PUSCH transmission parameter corresponding to the BWP. In such a manner, different PUSCH transmission parameters may be adopted for PUSCH transmission on different BWPs, and PUSCH transmission flexibility is further improved.

It is to be noted that the wireless communication system 100 illustrated in FIG. 1 is only adopted to describe the technical solutions of the disclosure more clearly and not intended to limit the disclosure. Those of ordinary skill in the art should know that, along with evolution of a network architecture and emergence of a new service scenario, the technical solutions provided in the disclosure are also applied to similar technical problems.

Referring to FIG. 2, FIG. 2 is UE 200 according to some embodiments of the disclosure. As illustrated in FIG. 2, the UE 200 may include one or more UE processors 201, a memory 202, a communication interface 203, a receiver 205, a transmitter 206, a coupler 207, an antenna 208, a user interface 209, and input/output modules (including an audio input/output module 210, a key input module 211, a display 212 and the like). These parts may be connected through a bus 204 or in another manner. Connection through the bus is taken as an example in FIG. 2.

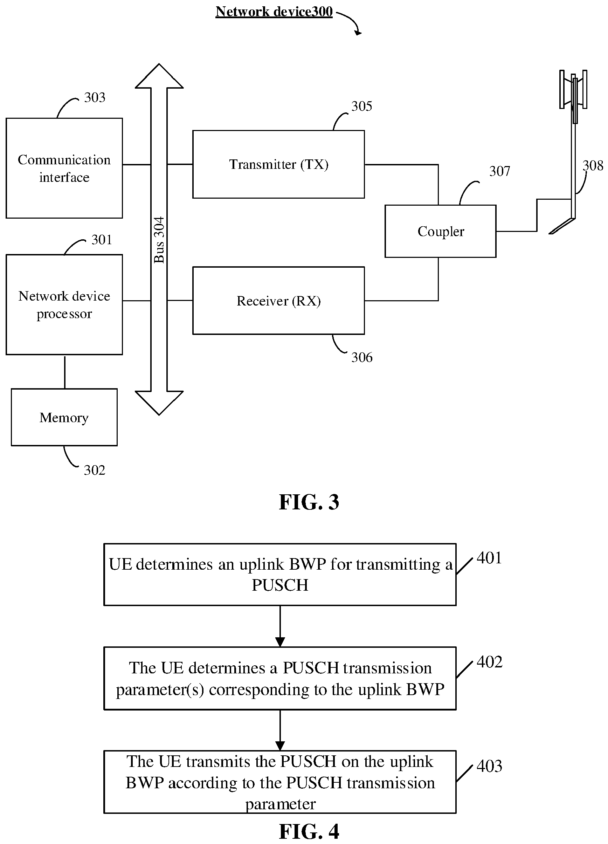

Here, the communication interface 203 may be configured for communication between the UE 200 and another communication device, for example, a network device. Specifically, the network device may be a network device 300 illustrated in FIG. 3. Specifically, the communication interface 203 may be an LTE (4th Generation (4G)) communication interface, or may be a 5G or future NR communication interface. Not limited to a wireless communication interface, the UE 200 may also be configured with a wired communication interface 203, for example, a Local Area Network (LAN) interface.

The transmitter 206 may be configured to perform transmission processing, for example, signal modulation, on a signal output by the UE processor 201. The receiver 205 may be configured to perform reception processing, for example, signal demodulation, on a mobile communication signal received by the antenna 208. In some embodiments of the disclosure, the transmitter 206 and the receiver 205 may be considered as a wireless modem. In the UE 200, the numbers of the transmitter 206 and the receiver 205 may both be one or more. The antenna 208 may be configured to convert electromagnetic energy in a transmission line into an electromagnetic wave in a free space or convert the electromagnetic wave in the free space into the electromagnetic energy in the transmission line. The coupler 207 is configured to divide the mobile communication signal received by the antenna 208 into multiple paths for allocation to multiple receivers 205.

Besides the transmitter 206 and receiver 205 illustrated in FIG. 2, the UE 200 may further include another communication part, for example, a Global Positioning System (GPS) module, a Bluetooth module and a Wireless Fidelity (Wi-Fi) module. Unlimited to the abovementioned wireless communication signal, the UE 200 may also support another wireless communication signal, for example, a satellite signal and a short wave signal. Not limited to wireless communication, the UE 200 may also be configured with the wired network interface (for example, the LAN interface) to support wired communication.

The input/output module may be configured to implement interaction between the UE 200 and a user/external environment, and may mainly include the audio input/output module 210, the key input module 211, the display 212 and the like. Specifically, the input/output module may further include a camera, a touch screen, a sensor and the like. Herein, the input/output modules all communicate with the UE processor 201 through the user interface 209.

The memory 202 is coupled to the UE processor 201, and is configured to store various software programs and/or multiple sets of instructions. Specifically, the memory 202 may include a high-speed Random Access Memory (RAM), and may also include a nonvolatile memory, for example, one or more disk storage devices, flash memories or other nonvolatile solid-state storage devices. The memory 202 may store an operating system (called a system for short hereinafter), for example, an embedded operating system such as ANDDROID, IOS, WINDOWS or LINUX). The memory 202 may further store a network communication program, and the network communication program may be configured for communication with one or more additional devices, one or more UEs and one or more network devices. The memory 202 may further store a user interface program, and the user interface program may realistically display a content of an application program through a graphical operation interface and receive a control operation of the user over the application program through an input control such as a menu, a dialog box and a button.

In some embodiments of the disclosure, the memory 202 may be configured to store an implementation program for an uplink data transmission method provided in one or more embodiments of the disclosure on a UE 200 side. Implementation of the uplink data transmission method provided in one or more embodiments of the disclosure refers to the following method embodiment.

In some embodiments of the disclosure, the UE processor 201 may be configured to read and execute a computer-readable instruction. Specifically, the UE processor 201 may be configured to call the program stored in the memory 212, for example, the implementation program for the uplink data transmission method provided in one or more embodiments of the disclosure on the UE 200 side, and execute instructions included in the program.

It can be understood that the UE 200 may be implemented into a mobile device, a mobile station, a mobile unit, a wireless unit, a remote unit, a user agent, a mobile client and the like.

It is to be noted that the UE 200 illustrated in FIG. 2 is only an implementation of the embodiments of the disclosure and, during a practical application, the UE 200 may further include more or fewer parts. There are no limits made herein.

Referring to FIG. 3, FIG. 3 is a network device 300 according to some embodiments of the disclosure. As illustrated in FIG. 3, the network device 300 may include one or more network device processors 301, a memory 302, a communication interface 303, a transmitter 305, a receiver 306, a coupler 307 and an antenna 308. These parts may be connected through a bus 304 or in another manner. Connection through the bus is taken as an example in FIG. 4.

Here, the communication interface 303 may be configured for communication between the network device 300 and another communication device, for example, UE or another network device. Specifically, the UE may be UE 200 illustrated in FIG. 2. Specifically, the communication interface 303 may be an LTE (4G) communication interface, or may be a 5G or future NR communication interface. Not limited to a wireless communication interface, the network device 300 may also be configured with a wired communication interface 303 to support wired communication. For example, a backhaul link between a network device 300 and another network device 300 may be a wired communication connection.

The transmitter 305 may be configured to perform transmission processing, for example, signal modulation, on a signal output by the network device processor 301. The receiver 306 may be configured to perform reception processing, for example, signal demodulation, on a mobile communication signal received by the antenna 308. In some embodiments of the disclosure, the transmitter 305 and the receiver 306 may be considered as a wireless modem. In the network device 300, the numbers of the transmitter 305 and the receiver 306 may both be one or more. The antenna 308 may be configured to convert electromagnetic energy in a transmission line into an electromagnetic wave in a free space or convert the electromagnetic wave in the free space into the electromagnetic energy in the transmission line. The coupler 307 may be configured to divide the mobile communication signal into multiple paths for allocation to multiple receivers 306.

The memory 302 is coupled to the network device processor 301, and is configured to store various software programs and/or multiple sets of instructions. Specifically, the memory 302 may include a high-speed RAM, and may also include a nonvolatile memory, for example, one or more disk storage devices, flash memories or other nonvolatile solid-state storage devices. The memory 302 may store an operating system (called a system for short hereinafter), for example, an embedded operating system such as uCOS, VxWorks and RTLinux. The memory 302 may further store a network communication program, and the network communication program may be configured for communication with one or more additional devices, one or more pieces of terminal devices and one or more network devices.

The network device processor 301 may be configured to perform wireless channel management, call implementation and establishment and removal of a communication link and provide cell handover control and the like for a user in a present control region. Specifically, the network device processor 301 may include an Administration Module/Communication Module (AM/CM) (a center configured for voice path switching and information exchange), a Basic Module (BM) (configured to realize call processing, signaling processing, radio resource management, radio link management and circuit maintenance functions), a Transcoder and SubMultiplexer (TCSM) (configured to realize multiplexing, demultiplexing and transcoding functions) or the like.

In the embodiments of the disclosure, the memory 302 may be configured to store an implementation program for an uplink data transmission method provided in one or more embodiments of the disclosure on a network device 300 side. Implementation of the uplink data transmission method provided in one or more embodiments of the disclosure refers to the following method embodiment.

In the embodiments of the disclosure, the network device processor 301 may be configured to read and execute a computer-readable instruction. Specifically, the network device processor 301 may be configured to call the program stored in the memory 302, for example, the implementation program for the uplink data transmission method provided in one or more embodiments of the disclosure on the network device 300 side, and execute instructions included in the program.

It can be understood that the network device 300 may be implemented into a BTS, a wireless transceiver, a Basic Service Set (BSS), an Extended Service Set (ESS), a NodeB, an eNodeB, an AP, a TRP or the like.

It is to be noted that the network device 300 illustrated in FIG. 3 is only an implementation of the embodiments of the disclosure and, during a practical application, the network device 300 may further include more or fewer parts. There are no limits made herein.

On the basis of the embodiments corresponding to the wireless communication system 100, the UE 200 and the network device 300 respectively, an embodiment of the disclosure provides an uplink data transmission method.

Referring to FIG. 4, FIG. 4 is a flowchart of an uplink data transmission method according to an embodiment of the disclosure. The method includes the following steps.

In 401, UE determines an uplink BWP configured to transmit a PUSCH.

In an embodiment of the disclosure, 401 is executed responsive to that the UE is dynamically switched to a certain BWP for PUSCH transmission.

In an embodiment of the disclosure, a specific implementation of 401 includes the following operation.

The UE determines the uplink BWP for transmitting the PUSCH according to BWP indication information, DCI configured to schedule PUSCH transmission including the BWP indication information.

Specifically, a network device pre-configures multiple BWPs for the UE through high-layer signaling at first, and then indicates through the BWP indication information in the DCI that one BWP in the multiple BWPs is configured to transmit the PUSCH. Herein, the high-layer signaling may include Radio Resource Control (RRC) signaling, Medium Access Control (MAC) signaling and the like.

For example, there is made such a hypothesis that the network device pre-configures four BWPs and bandwidths corresponding to the four BWPs for the UE through the RRC signaling at first, and then the network device indicates the BWP for transmitting the PUSCH through the DCI, the DCI including the 2bit BWP indication information. For example, if the four BWPs are BWP1, BWP2, BWP3 and BWP4 and the 2bit BWP indication information is 00, the uplink BWP presently configured to transmit the PUSCH is BWP1. If the 2bit BWP indication information is 11, the uplink BWP presently configured to transmit the PUSCH is BWP4, and so on.

In an embodiment of the disclosure, the DCI may also be configured to trigger aperiodic Sounding Reference Signal (SRS) transmission on the activated uplink BWP.

In 402, the UE determines at least one PUSCH transmission parameter corresponding to the uplink BWP.

In an embodiment of the disclosure, the method further includes the following operation.

The UE receives high-layer signaling sent by a network device, the high-layer signaling being used to configure at least one corresponding PUSCH transmission parameter for each uplink BWP of the UE.

A specific implementation of 402 includes the following operation.

The UE determines the at least one PUSCH transmission parameter corresponding to the uplink BWP according to the high-layer signaling.

Herein, the high-layer signaling may include RRC signaling, MAC signaling and the like.

Specifically, the network device pre-configures the bandwidths corresponding to the four BWPs for the UE through a piece of high-layer signaling at first, and then configures corresponding PUSCH transmission parameters for the four BWPs through another piece of high-layer signaling respectively. Or, the network device pre-configures the bandwidths corresponding to the four BWPs for the UE and configures the corresponding PUSCH transmission parameters for the four BWPs through the same high-layer signaling.

For example, the four BWPs are BWP1, BWP2, BWP3 and BWP4. There is made such a hypothesis that the network device configures at least one PUSCH transmission parameter 1 for BWP1 through high-layer signaling, the network device configures at least one PUSCH transmission parameter 2 for BWP2, the network device configures at least one PUSCH transmission parameter 3 for BWP3 and the network device configures at least one PUSCH transmission parameter 4 for BWP4. If the uplink BWP for transmitting the PUSCH is BWP1, the UE may obtain according to the high-layer signaling that the at least one PUSCH transmission parameter corresponding to BWP1 is the at least one PUSCH transmission parameter 1, and so on.

In 403, the UE transmits the PUSCH on the uplink BWP according to the at least one PUSCH transmission parameter for uplink data transmission.

In an embodiment of the disclosure, the at least one PUSCH transmission parameter includes at least one of: an uplink transmission mode, a codebook subset restriction configuration, a maximum uplink transmission layer number, a frequency selective precoding configuration and a Demodulation Reference Signal (DMRS) configuration.

In an embodiment of the disclosure, the uplink transmission mode includes codebook-based transmission and/or non-codebook-based transmission.

In an embodiment of the disclosure, the codebook subset restriction configuration is configured to indicate a codebook subset available for the PUSCH in a predetermined codebook.

In an embodiment of the disclosure, the maximum uplink transmission layer number is configured to determine a rank and/or precoding matrix available for the PUSCH.

In an embodiment of the disclosure, the frequency selective precoding configuration includes indication information about whether frequency selective precoding is allowed and/or a sub-band size configuration for frequency selective precoding or a sub-band number configuration for frequency selective precoding.

In an embodiment of the disclosure, the DMRS configuration is configured to indicate a parameter configuration of a DMRS for the PUSCH. In the disclosure, the DMRS of the PUSCH refers to a DMRS configured to demodulate the PUSCH.

In an embodiment of the disclosure, the DMRS configuration includes at least one of: a DMRS type configuration, a DMRS time-frequency resource configuration, a DMRS sequence configuration and a DMRS frequency hopping configuration.

Herein, the DMRS type configuration may be a type 1 or a type 2, and different time-domain, frequency-domain or code-domain resources may be adopted for DMRS s of different types.

Herein, the DMRS time-frequency resource configuration includes a DMRS symbol configuration, for example, an additional DMRS configuration or a comb configuration.

Herein, the DMRS sequence configuration includes a configuration of a scrambling Identifier (ID) and the like of the DMRS.

Herein, the DMRS frequency hopping configuration includes a configuration of group frequency hopping, sequence frequency hopping or the like.

In an embodiment of the disclosure, a specific implementation of the operation that the UE transmits the PUSCH on the uplink BWP according to the at least one PUSCH transmission parameter includes the following operation.

The UE transmits the PUSCH on the uplink BWP according to the at least one PUSCH transmission parameter and scheduling information in the DCI used to schedule the PUSCH.

Herein, the scheduling information in the DCI includes at least one of: Transmitted Precoding Matrix Indicator (TPMI) information, Transmitted Rank Indication (TRI) information, Precoding Matrix Indicator (PMI) information, SRS Resource Indication (SRI) information, DMRS port indication information and DMRS scrambling sequence ID indication information.

In an embodiment of the disclosure, the at least one PUSCH transmission parameter includes the uplink transmission mode, and a specific implementation of the operation that the UE transmits the PUSCH on the uplink BWP according to the at least one PUSCH transmission parameter and the scheduling information in the DCI includes the following operations.

The UE determines whether the DCI includes the TRI information and the TPMI information according to the uplink transmission mode.

Responsive to that the DCI includes the TRI information and the TPMI information, the UE transmits the PUSCH on the uplink BWP according to the determined TRI information and TPMI information.

Specifically, if the uplink transmission mode is codebook-based transmission, it is indicated that the DCI includes the TRI information and the TPMI information, and the UE is required to determine a transmission layer number and adopted precoding matrix for the PUSCH according to the TRI information and the TPMI information and then transmit the PUSCH on the uplink BWP according to the determined transmission layer number and adopted precoding matrix.

If the uplink transmission mode is non-codebook-based transmission, it is indicated that the DCI does not include the TRI information and the TPMI information, and the UE is required to determine the transmission layer number and adopted precoding matrix for the PUSCH according to the SRI information in the DCI and then transmit the PUSCH on the uplink BWP according to the determined transmission layer number and adopted precoding matrix.

In an embodiment of the disclosure, the at least one PUSCH transmission parameter includes the codebook subset restriction configuration, and a specific implementation of the operation that the UE transmits the PUSCH on the uplink BWP according to the at least one PUSCH transmission parameter and the scheduling information in the DCI includes the following operations.

The UE determines a target codebook subset in the predetermined codebook according to the codebook subset restriction configuration.

The UE determines the precoding matrix for transmission of the PUSCH in the target codebook subset according to the PMI information in the DCI.

The UE transmits the PUSCH on the uplink BWP according to the determined precoding matrix.

For example, there is made such a hypothesis that the predetermined codebook may include three codebook subsets, for example, a codebook subset 1, a codebook subset 2 and a codebook subset 3, corresponding to three UE antenna correlation capabilities, i.e., total correlation, partial correlation and noncorrelation, respectively. If the codebook subset restriction configuration indicates the codebook subset 1, the UE determines the codebook subset 1 as the target codebook subset. There is made such a hypothesis that the target codebook subset includes four precoding matrixes and the four precoding matrixes are a precoding matrix 1, a precoding matrix 2, a precoding matrix 3 and a precoding matrix 4 respectively. If the PMI information indicates the precoding matrix 4, the UE determines the precoding matrix 4 as the precoding matrix for transmission of the PUSCH. Finally, the UE transmits the PUSCH on the uplink BWP according to the precoding matrix 4.

In an embodiment of the disclosure, the at least one PUSCH transmission parameter includes the maximum uplink transmission layer number, and a specific implementation of the operation that the UE transmits the PUSCH on the uplink BWP according to the at least one PUSCH transmission parameter and the scheduling information in the DCI includes the following operations.

The UE determines the transmission layer number for transmission of the PUSCH according to the maximum uplink transmission layer number and the TRI information in the DCI; or, the UE determines the transmission layer number for transmission of the PUSCH according to the maximum uplink transmission layer number and the SRI information in the DCI.

The UE transmits the PUSCH on the uplink BWP according to the determined transmission layer number.

In an embodiment of the disclosure, the at least one PUSCH transmission parameter includes the frequency selective precoding configuration, and a specific implementation of the operation that the UE transmits the PUSCH on the uplink BWP according to the at least one PUSCH transmission parameter and the scheduling information in the DCI includes the following operations.

The UE determines the precoding matrix for transmission of the PUSCH according to the frequency selective precoding configuration and the PMI information in the DCI.

The UE transmits the PUSCH on the uplink BWP according to the determined precoding matrix.

Specifically, the frequency selective precoding configuration includes the indication information about whether frequency selective precoding is allowed, and it is indicated that the UE determines whether the PMI information in the DCI is configured to indicate a wideband PMI or a sub-band PMI according to the indication information about whether frequency selective precoding is allowed. Then, the UE determines the precoding matrix in the predetermined codebook according to the wideband PMI or sub-band PMI in the PMI information, the determined precoding matrix being configured to transmit the PUSCH on the uplink BWP. For example, if the indication information indicates that frequency selective precoding is allowed, the UE determines that the PMI information in the DCI is configured to indicate the sub-band PMI; and if the indication information indicates that frequency selective precoding is not allowed, the UE determines that the PMI information in the DCI is configured to indicate the wideband PMI.

The frequency selective precoding configuration includes the sub-band size or number configuration for frequency selective precoding, and it is indicated that the UE determines the sub-band PMI indicated by the PMI information in the DCI according to the sub-band size or number configuration for frequency selective precoding. Then, the UE determines a precoding matrix on each sub-band in the predetermined codebook according to the sub-band PMI, and transmits the PUSCH on the uplink BWP according to the determined precoding matrix on each sub-band.

In an embodiment of the disclosure, the at least one PUSCH transmission parameter includes the indication information about whether selective precoding configuration is allowed, and a specific implementation of the operation that the UE transmits the PUSCH on the uplink BWP according to the at least one PUSCH transmission parameter and the scheduling information in the DCI includes the following operations.

The UE determines whether to perform frequency selective precoding on data in the PUSCH according to the SRI information in the DCI and the indication information about whether frequency selective precoding is allowed.

The UE transmits the PUSCH on the uplink BWP according to a result of the determination.

Specifically, if a port number of an SRS resource indicated by the SRI information in the DCI is more than or equal to 4, the UE determines whether frequency selective precoding is required to be performed on the data in the PUSCH according to the indication information about whether frequency selective precoding is allowed. Finally, the UE transmits the PUSCH on the uplink BWP on the basis of the determined result. For example, if the determined result is that frequency selective precoding is required to be performed on the data in the PUSCH, the UE, before transmitting the PUSCH, performs frequency selective precoding on the data in the PUSCH at first, and then transmits the PUSCH, and so on. For example, if the determined result is that frequency selective precoding is not required to be performed on the data in the PUSCH, the UE, before transmitting the PUSCH, performs wideband precoding on the data in the PUSCH at first, and then transmits the PUSCH, and so on.

If the port number of the SRS resource indicated by the SRI information in the DCI is smaller than 4, the UE determines that frequency selective precoding is not required to be performed on the data in the PUSCH, only performs wideband precoding on the data in the PUSCH and then transmits the PUSCH.

In an embodiment of the disclosure, the at least one PUSCH transmission parameter includes the DMRS configuration, and a specific implementation of the operation that the UE transmits the PUSCH on the uplink BWP according to the at least one PUSCH transmission parameter and the scheduling information in the DCI includes the following operations.

The UE determines a physical resource for the DMRS according to the DMRS configuration and the DMRS port indication information in the DCI; and the UE transmits the DMRS of the PUSCH on the uplink WP according to the determined physical resource.

Furthermore, the DMRS configuration includes the DMRS type configuration, and a specific implementation of the operation that the UE determines the physical resource for the DMRS according to the DMRS configuration and the DMRS port indication information in the DCI includes the following operations.

The UE determines a DMRS type according to the DMRS type configuration; and the UE determines an antenna port and physical resource occupied by the DMRS according to a DMRS indication information mapping table corresponding to the DMRS type and the DMRS port indication information.

Furthermore, the DMRS configuration includes the time-frequency resource configuration, and a specific implementation of the operation that the UE determines the physical resource for the DMRS according to the DMRS configuration and the DMRS port indication information in the DCI includes the following operations.

The UE determines a maximum DMRS symbol number according to the time-frequency resource configuration; and the UE determines the antenna port and physical resource occupied by the DMRS according to a DMRS indication information mapping table corresponding to the maximum DMRS symbol number and the DMRS port indication information.

In an embodiment of the disclosure, the at least one PUSCH transmission parameter includes the DMRS sequence configuration, and a specific implementation of the operation that the UE transmits the PUSCH on the uplink BWP according to the at least one PUSCH transmission parameter and the scheduling information in the DCI includes the following operations.

The UE determines a sequence for the DMRS according to the DMRS sequence configuration and the DMRS scrambling sequence ID indication information in the DCI.

The UE transmits the DMRS of the PUSCH on the uplink BWP according to the determined sequence.

Specifically, the DMRS sequence configuration includes two candidate scrambling sequence IDs, the DCI includes 1bit scrambling sequence ID indication information, and the 1bit scrambling sequence ID indication information is configured to determine a scrambling sequence ID in the two candidate scrambling sequence IDs for generation of the DMRS sequence.

In an embodiment of the disclosure, the at least one PUSCH transmission parameter includes the uplink transmission mode, and a specific implementation of the operation that the UE transmits the PUSCH on the uplink BWP according to the at least one PUSCH transmission parameter and the scheduling information in the DCI includes the following operations.

The UE determines the SRS resource indicated by the SRI information in the DCI according to the uplink transmission mode.

The UE determines a beam or precoding matrix for transmission of the PUSCH according to a beam or precoding matrix for the determined SRS resource.

The UE transmits the PUSCH on the uplink BWP according to the determined beam or precoding matrix.

Specifically, if the uplink transmission mode is codebook-based transmission, the SRI information in the DCI is configured to indicate an SRS resource in a preconfigured SRS resource set, and the UE determines a sending beam for transmission of an SRS on the SRS resource as a sending beam for transmission of the PUSCH and then transmits the PUSCH on the uplink BWP according to the determined sending beam.

If the uplink transmission mode is non-codebook-based transmission, the SRI information in the DCI is configured to indicate one or more SRS resources in the preconfigured SRS resource set, and the UE determines the sending beam and/or precoding matrix for transmission of the SRS on the one or more SRS resources as the sending beam and/or precoding matrix for transmission of the PUSCH and then transmits the PUSCH on the uplink BWP according to the determined sending beam and/or precoding matrix.

In an embodiment of the disclosure, the at least one PUSCH transmission parameter includes the frequency selective precoding configuration, and a specific implementation of the operation that the UE transmits the PUSCH on the uplink BWP according to the at least one PUSCH transmission parameter includes the following operations.

The UE determines whether frequency selective precoding is required to be performed on the data in the PUSCH according to the frequency selective precoding configuration; and the UE transmits the PUSCH on the uplink BWP according to a result of the determination.

In an embodiment of the disclosure, the at least one PUSCH transmission parameter includes the DMRS configuration, and a specific implementation of the operation that the UE transmits the PUSCH on the uplink BWP according to the at least one PUSCH transmission parameter includes the following operations.

The UE determines the physical resource for the DMRS and/or the sequence for the DMRS according to the DMRS configuration, and transmits the DMRS of the PUSCH on the uplink BWP according to the determined physical resource and/or sequence for the DMRS. For example, the UE determines an Orthogonal Frequency Division Multiplexing (OFDM) symbol occupied by the DMRS according to a symbol number configuration in the DMRS configuration.

It can be seen that, in the disclosure, the network device may configure a set of PUSCH transmission parameter for each BWP of the UE at first; then, responsive to that the UE is dynamically switched to a certain BWP for PUSCH transmission, the UE may determine the at least one PUSCH transmission parameter corresponding to the BWP as the at least one PUSCH transmission parameter for PUSCH transmission; and finally, the UE transmits the PUSCH on the BWP on the basis of the at least one PUSCH transmission parameter corresponding to the BWP. In such a manner, different PUSCH transmission parameters may be adopted for PUSCH transmission on different BWPs, and PUSCH transmission flexibility is further improved.

It is to be noted that the examples in the disclosure are only adopted for explanation and should not form any limit.

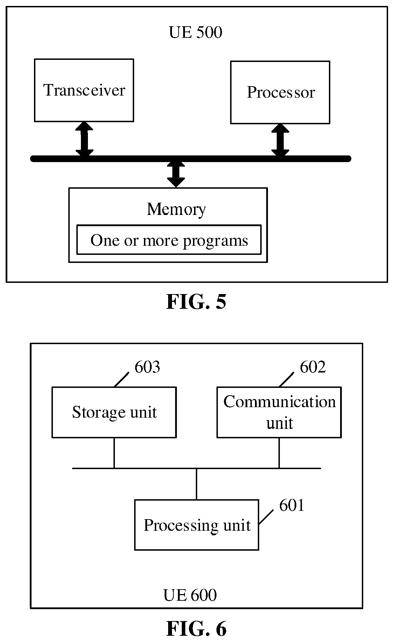

Referring to FIG. 5, FIG. 5 is UE 500 according to an embodiment of the disclosure. The UE 500 includes one or more processors, one or more memories, one or more transceivers and one or more programs.

The one or more programs are stored in the memory and are configured to be executed by the one or more processors.

The programs include instructions for executing the following steps.

An uplink BWP configured to transmit a PUSCH is determined.

At least one PUSCH transmission parameter corresponding to the uplink BWP is determined.

The PUSCH is transmitted on the uplink BWP according to the at least one PUSCH transmission parameter.

In an embodiment of the disclosure, in terms of determining the uplink BWP for transmitting the PUSCH, the programs include an instruction specifically configured to execute the following step.

The uplink BWP for transmitting the PUSCH is determined according to BWP indication information, DCI used to schedule the PUSCH including the BWP indication information.

In an embodiment of the disclosure, the programs include an instruction further configured to execute the following step.

High-layer signaling sent by a network device is received, the high-layer signaling being used to configure at least one corresponding PUSCH transmission parameter for each uplink BWP of the UE.

In terms of determining the at least one PUSCH transmission parameter corresponding to the uplink BWP, the programs include an instruction specifically configured to execute the following step.

The at least one PUSCH transmission parameter corresponding to the uplink BWP is determined according to the high-layer signaling.

In an embodiment of the disclosure, the at least one PUSCH transmission parameter includes at least one of: an uplink transmission mode, a codebook subset restriction configuration, a maximum uplink transmission layer number, a frequency selective precoding configuration and a DMRS configuration.

In an embodiment of the disclosure, the uplink transmission mode includes codebook-based transmission and/or non-codebook-based transmission.

In an embodiment of the disclosure, the codebook subset restriction configuration is configured to indicate a codebook subset available for the PUSCH in a predetermined codebook.

In an embodiment of the disclosure, the maximum uplink transmission layer number is configured to determine a rank and/or precoding matrix available for the PUSCH.

In an embodiment of the disclosure, the frequency selective precoding configuration includes indication information about whether frequency selective precoding is allowed and/or a sub-band size configuration for frequency selective precoding or a sub-band number configuration for frequency selective precoding.

In an embodiment of the disclosure, the DMRS configuration is configured to indicate a parameter configuration for a DMRS of the PUSCH, and the DMRS configuration includes at least one of: a DMRS type configuration, a DMRS time-frequency resource configuration, a DMRS sequence configuration and a DMRS frequency hopping configuration.

In an embodiment of the disclosure, in terms of transmitting the PUSCH on the uplink BWP according to the at least one PUSCH transmission parameter, the programs include an instruction specifically configured to execute the following step.

The PUSCH is transmitted on the uplink BWP according to the at least one PUSCH transmission parameter and scheduling information in the DCI used to schedule the PUSCH.

In an embodiment of the disclosure, the at least one PUSCH transmission parameter includes the uplink transmission mode, and in terms of transmitting the PUSCH on the uplink BWP according to the at least one PUSCH transmission parameter and the scheduling information in the DCI, the programs include instructions specifically configured to execute the following steps.

Whether the DCI includes TRI information and TPMI information is determined according to the uplink transmission mode.

Responsive to that the DCI includes the TRI information and the TPMI information, the PUSCH is transmitted on the uplink BWP according to the determined TRI and TPMI information.

In an embodiment of the disclosure, the at least one PUSCH transmission parameter includes the codebook subset restriction configuration, and in terms of transmitting the PUSCH on the uplink BWP according to the at least one PUSCH transmission parameter and the scheduling information in the DCI, the programs include instructions specifically configured to execute the following steps.

A target codebook subset in the predetermined codebook is determined according to the codebook subset restriction configuration.

The precoding matrix for transmission of the PUSCH in the target codebook subset is determined according to PMI information in the DCI.

The PUSCH is transmitted on the uplink BWP according to the determined precoding matrix.

In an embodiment of the disclosure, the at least one PUSCH transmission parameter includes the maximum uplink transmission layer number, and in terms of transmitting the PUSCH on the uplink BWP according to the at least one PUSCH transmission parameter and the scheduling information in the DCI, the programs include instructions specifically configured to execute the following steps.

A transmission layer number for transmission of the PUSCH is determined according to the maximum uplink transmission layer number and the TRI information in the DCI; or, the transmission layer number for transmission of the PUSCH is determined according to the maximum uplink transmission layer number and SRI information in the DCI.

The PUSCH is transmitted on the uplink BWP according to the determined transmission layer number.

In an embodiment of the disclosure, the at least one PUSCH transmission parameter includes the frequency selective precoding configuration, and in terms of transmitting the PUSCH on the uplink BWP according to the at least one PUSCH transmission parameter and the scheduling information in the DCI, the programs include instructions specifically configured to execute the following steps.

The precoding matrix for transmission of the PUSCH is determined according to the frequency selective precoding configuration and the PMI information in the DCI.

The PUSCH is transmitted on the uplink BWP according to the determined precoding matrix.

In an embodiment of the disclosure, the at least one PUSCH transmission parameter includes the indication information about whether frequency selective precoding is allowed, and in terms of transmitting the PUSCH on the uplink BWP according to the at least one PUSCH transmission parameter and the scheduling information in the DCI, the programs include instructions specifically configured to execute the following steps.

Whether to perform frequency selective precoding on data in the PUSCH is determined according to the indication information about whether frequency selective precoding is allowed and the SRI information in the DCI.

The PUSCH is transmitted on the uplink BWP according to a result of the determination.

In an embodiment of the disclosure, the at least one PUSCH transmission parameter includes the DMRS configuration, and in terms of transmitting the PUSCH on the uplink BWP according to the at least one PUSCH transmission parameter and the scheduling information in the DCI, the programs include instructions specifically configured to execute the following steps.

A physical resource for the DMRS is determined according to the DMRS configuration and DMRS port indication information in the DCI.

The DMRS of the PUSCH is transmitted on the uplink BWP according to the determined physical resource.

In an embodiment of the disclosure, the at least one PUSCH transmission parameter includes the DMRS sequence configuration, and in terms of transmitting the PUSCH on the uplink BWP according to the at least one PUSCH transmission parameter and the scheduling information in the DCI, the programs include instructions specifically configured to execute the following steps.

A sequence for the DMRS is determined according to the DMRS sequence configuration and DMRS scrambling sequence ID indication information in the DCI.

The DMRS of the PUSCH is transmitted on the uplink BWP according to the determined sequence.

In an embodiment of the disclosure, the at least one PUSCH transmission parameter includes the uplink transmission mode, and in terms of transmitting the PUSCH on the uplink BWP according to the at least one PUSCH transmission parameter and the scheduling information in the DCI, the programs include instructions specifically configured to execute the following steps.

An SRS resource indicated by the SRI information in the DCI is determined according to the uplink transmission mode.

A beam or precoding matrix for transmission of the PUSCH is determined according to a beam or precoding matrix for the determined SRS resource.

The PUSCH is transmitted on the uplink BWP according to the determined beam or precoding matrix.

In an embodiment of the disclosure, the at least one PUSCH transmission parameter includes the frequency selective precoding configuration, and in terms of transmitting the PUSCH on the uplink BWP according to the at least one PUSCH transmission parameter, the programs include instructions specifically configured to execute the following steps.

Whether frequency selective precoding is required to be performed on the data in the PUSCH is determined according to the frequency selective precoding configuration.

The PUSCH is transmitted on the uplink BWP according to a result of the determination.

In an embodiment of the disclosure, the at least one PUSCH transmission parameter includes the DMRS configuration, and in terms of transmitting the PUSCH on the uplink BWP according to the at least one PUSCH transmission parameter, the programs include instructions specifically configured to execute the following steps.

The physical resource for the DMRS and/or the sequence for the DMRS are/is determined according to the DMRS configuration.

The DMRS of the PUSCH is transmitted on the uplink BWP according to the determined physical resource and/or sequence for the DMRS.

It is to be noted that specific implementations of the contents of the embodiment may refer to the abovementioned method and will not be elaborated herein.

Referring to FIG. 6, FIG. 6 is UE 600 according to an embodiment of the disclosure. The UE 600 includes a processing unit 601, a communication unit 602 and a storage unit 603.

The processing unit 601 is configured to determine an uplink BWP configured to transmit a PUSCH.

The processing unit 601 is further configured to determine at least one PUSCH transmission parameter corresponding to the uplink BWP.

The processing unit 601 is further configured to transmit the PUSCH on the uplink BWP through the communication unit 602 according to the at least one PUSCH transmission parameter.

In an embodiment of the disclosure, in terms of determining the uplink BWP for transmitting the PUSCH, the processing unit 601 is specifically configured to:
determine the uplink BWP for transmitting the PUSCH according to BWP indication information, DCI used to schedule the PUSCH including the BWP indication information.

In an embodiment of the disclosure, the processing unit 601 is further configured to receive high-layer signaling sent by a network device, the high-layer signaling being used to configure at least one corresponding PUSCH transmission parameter for each uplink BWP of the UE.

In terms of determining the at least one PUSCH transmission parameter corresponding to the uplink BWP, the processing unit 601 is specifically configured to:
determine the at least one PUSCH transmission parameter corresponding to the uplink BWP according to the high-layer signaling.

In an embodiment of the disclosure, the at least one PUSCH transmission parameter includes at least one of: an uplink transmission mode, a codebook subset restriction configuration, a maximum uplink transmission layer number, a frequency selective precoding configuration and a DMRS configuration.

In an embodiment of the disclosure, the uplink transmission mode includes codebook-based transmission and/or non-codebook-based transmission.

In an embodiment of the disclosure, the codebook subset restriction configuration is configured to indicate a codebook subset available for the PUSCH in a predetermined codebook.

In an embodiment of the disclosure, the maximum uplink transmission layer number is configured to determine a rank and/or precoding matrix available for the PUSCH.

In an embodiment of the disclosure, the frequency selective precoding configuration includes indication information about whether frequency selective precoding is allowed and/or a sub-band size configuration for frequency selective precoding or a sub-band number configuration for frequency selective precoding.

In an embodiment of the disclosure, the DMRS configuration is configured to indicate a parameter configuration for a DMRS of the PUSCH, and the DMRS configuration includes at least one of: a DMRS type configuration, a DMRS time-frequency resource configuration, a DMRS sequence configuration and a DMRS frequency hopping configuration.

In an embodiment of the disclosure, in terms of transmitting the PUSCH on the uplink BWP according to the at least one PUSCH transmission parameter, the processing unit 601 is specifically configured to:
transmit the PUSCH on the uplink BWP according to the at least one PUSCH transmission parameter and scheduling information in the DCI used to schedule the PUSCH.

In an embodiment of the disclosure, the at least one PUSCH transmission parameter includes the uplink transmission mode, and in terms of transmitting the PUSCH on the uplink BWP according to the at least one PUSCH transmission parameter and the scheduling information in the DCI, the processing unit 601 is specifically configured to:
determine whether the DCI includes TRI information and TPMI information according to the uplink transmission mode; and
responsive to that the DCI includes the TRI information and the TPMI information, transmit the PUSCH on the uplink BWP according to the determined TRI and TPMI information.

In an embodiment of the disclosure, the at least one PUSCH transmission parameter includes the codebook subset restriction configuration, and in terms of transmitting the PUSCH on the uplink BWP according to the at least one PUSCH transmission parameter and the scheduling information in the DCI, the processing unit 601 is specifically configured to:
determine a target codebook subset in the predetermined codebook according to the codebook subset restriction configuration;
determine the precoding matrix for transmission of the PUSCH in the target codebook subset according to PMI information in the DCI; and
transmit the PUSCH on the uplink BWP according to the determined precoding matrix.

In an embodiment of the disclosure, the at least one PUSCH transmission parameter includes the maximum uplink transmission layer number, and in terms of transmitting the PUSCH on the uplink BWP according to the at least one PUSCH transmission parameter and the scheduling information in the DCI, the processing unit 601 is specifically configured to:
determine a transmission layer number for transmission of the PUSCH according to the maximum uplink transmission layer number and the TRI information in the DCI, or determine the transmission layer number for transmission of the PUSCH according to the maximum uplink transmission layer number and SRI information in the DCI; and
transmit the PUSCH on the uplink BWP according to the determined transmission layer number.

In an embodiment of the disclosure, the at least one PUSCH transmission parameter includes the frequency selective precoding configuration, and in terms of transmitting the PUSCH on the uplink BWP according to the at least one PUSCH transmission parameter and the scheduling information in the DCI, the processing unit 601 is specifically configured to:
determine the precoding matrix for transmission of the PUSCH according to the frequency selective precoding configuration and the PMI information in the DCI; and
transmit the PUSCH on the uplink BWP according to the determined precoding matrix.

In an embodiment of the disclosure, the at least one PUSCH transmission parameter includes the indication information about whether frequency selective precoding is allowed, and in terms of transmitting the PUSCH on the uplink BWP according to the at least one PUSCH transmission parameter and the scheduling information in the DCI, the processing unit 601 is specifically configured to:
determine whether to perform frequency selective precoding on data in the PUSCH according to the indication information about whether frequency selective precoding is allowed and the SRI information in the DCI; and
transmit the PUSCH on the uplink BWP according to a result of the determination.

In an embodiment of the disclosure, the at least one PUSCH transmission parameter includes the DMRS configuration, and in terms of transmitting the PUSCH on the uplink BWP according to the at least one PUSCH transmission parameter and the scheduling information in the DCI, the processing unit 601 is specifically configured to:
determine a physical resource for the DMRS according to the DMRS configuration and DMRS port indication information in the DCI; and
transmit the DMRS of the PUSCH on the uplink BWP according to the determined physical resource.

In an embodiment of the disclosure, the at least one PUSCH transmission parameter includes the DMRS sequence configuration, and in terms of transmitting the PUSCH on the uplink BWP according to the at least one PUSCH transmission parameter and the scheduling information in the DCI, the processing unit 601 is specifically configured to:
determine a sequence for the DMRS according to the DMRS sequence configuration and DMRS scrambling sequence ID indication information in the DCI; and
transmit the DMRS of the PUSCH on the uplink BWP according to the determined sequence.

In an embodiment of the disclosure, the at least one PUSCH transmission parameter includes the uplink transmission mode, and in terms of transmitting the PUSCH on the uplink BWP according to the at least one PUSCH transmission parameter and the scheduling information in the DCI, the processing unit 601 is specifically configured to:
determine an SRS resource indicated by the SRI information in the DCI according to the uplink transmission mode;
determine a beam or precoding matrix for transmission of the PUSCH according to a beam or precoding matrix for the determined SRS resource; and
transmit the PUSCH on the uplink BWP according to the determined beam or precoding matrix.

In an embodiment of the disclosure, the at least one PUSCH transmission parameter includes the frequency selective precoding configuration, and in terms of transmitting the PUSCH on the uplink BWP according to the at least one PUSCH transmission parameter, the processing unit 601 is specifically configured to:
determine whether frequency selective precoding is required to be performed on the data in the PUSCH according to the frequency selective precoding configuration; and
transmit the PUSCH on the uplink BWP according to a result of the determination.

In an embodiment of the disclosure, the at least one PUSCH transmission parameter includes the DMRS configuration, and in terms of transmitting the PUSCH on the uplink BWP according to the at least one PUSCH transmission parameter, the processing unit 601 is specifically configured to:
determine the physical resource for the DMRS and/or the sequence for the DMRS according to the DMRS configuration; and
transmit the DMRS of the PUSCH on the uplink BWP according to the determined physical resource and/or sequence for the DMRS.

Herein, the processing unit 601 may be a processor or a controller (which may be, for example, a Central Processing Unit (CPU), a universal processor, a Digital Signal Processor (DSP), an Application-Specific Integrated Circuit (ASIC), a Field Programmable Gate Array (FPGA) or another programmable logical device, transistor logical device, hardware component or any combination thereof. It may implement or execute various exemplary logical blocks, modules and circuits described in combination with the contents disclosed in the disclosure. The processor may also be a combination realizing a calculation function (for example, including a combination of one or more microprocessors and a combination of a DSP and a microprocessor. The communication unit 602 may be a transceiver, a transceiver circuit, a radio frequency chip, a communication interface and the like. The storage unit 603 may be a memory.

When the processing unit 601 is a processor, the communication unit 602 is a communication interface and the storage unit 603 is a memory, the UE involved in the embodiment of the disclosure may be the UE illustrated in FIG. 5.

An embodiment of the disclosure also provides a computer-readable storage medium, which stores a computer program configured for electronic data exchange, the computer program enabling a computer to execute part or all of the steps executed by the first network device in the abovementioned methods.

An embodiment of the disclosure also provides a computer program product. The computer program product includes a non-transitory computer-readable storage medium storing a computer program. The computer program may be operated to enable a computer to execute part or all of the steps executed by the first network device in the abovementioned methods. The computer program product may be a software installation package.

The steps of the method or algorithm described in the embodiments of the disclosure may be implemented in a hardware manner, or may be implemented in a manner of executing, by a processor, software. A software instruction may consist of a corresponding software module, and the software module may be stored in a RAM, a flash memory, a Read Only Memory (ROM), an Erasable Programmable ROM (EPROM), an Electrically EPROM (EEPROM), a register, a hard disk, a mobile hard disk, a Compact Disc-ROM (CD-ROM) or a storage medium in any other form well known in the field. An exemplary storage medium is coupled to the processor, thereby enabling the processor to read information from the storage medium and write information into the storage medium. Of course, the storage medium may also be a component of the processor. The processor and the storage medium may be located in an ASIC. In addition, the ASIC may be located in an access network device, a target network device or a core network device. Of course, the processor and the storage medium may also exist in the access network device, the target network device or the core network device as discrete components.

Those skilled in the art may realize that, in one or more abovementioned examples, all or part of the functions described in the embodiments of the disclosure may be realized through software, hardware or any combination thereof. During implementation with the software, the embodiments may be implemented completely or partially in form of computer program product. The computer program product includes one or more computer instructions. When the computer program instruction is loaded and executed on a computer, the flows or functions according to the embodiments of the disclosure are completely or partially generated. The computer may be a universal computer, a dedicated computer, a computer network or another programmable device. The computer instruction may be stored in a computer-readable storage medium or transmitted from one computer-readable storage medium to another computer-readable storage medium. For example, the computer instruction may be transmitted from a website, computer, server or data center to another website, computer, server or data center in a wired (for example, coaxial cable, optical fiber and Digital Subscriber Line (DSL)) or wireless (for example, infrared, wireless and microwave) manner. The computer-readable storage medium may be any available medium accessible for the computer or a data storage device, such as a server and a data center, including one or more integrated available media. The available medium may be a magnetic medium (for example, a floppy disk, a hard disk and a magnetic tape), an optical medium (for example, a Digital Video Disc (DVD)), a semiconductor medium (for example, a Solid State Disk (SSD)) or the like.

The abovementioned specific implementations further describe the purposes, technical solutions and beneficial effects of the embodiments of the disclosure in detail. It is to be understood that the above is only the specific implementation of the embodiments of the disclosure and not intended to limit the scope of protection of the embodiments of the disclosure. Any modifications, equivalent replacements, improvements and the like made on the basis of the technical solutions of the embodiments of the disclosure shall fall within the scope of protection of the embodiments of the disclosure.

## Claims

1. An uplink data transmission method, **characterized in that** the method comprises:
determining (401), by a User Equipment, UE, an uplink Bandwidth Part, BWP, for transmitting a Physical Uplink Shared Channel, PUSCH;
determining (402), by the UE, at least one PUSCH transmission parameter corresponding to the uplink BWP; and
transmitting (403), by the UE, the PUSCH on the uplink BWP according to the at least one PUSCH transmission parameter;
wherein the at least one PUSCH transmission parameter comprises indication information about whether frequency selective precoding is allowed; and
transmitting (403), by the UE, the PUSCH on the uplink BWP according to the at least one PUSCH transmission parameter comprises:
determining, by the UE, whether PMI information in Downlink Control Information, DCI, is configured to indicate a wideband PMI or a sub-band PMI according to the indication information about whether frequency selective precoding is allowed; determining, by the UE, precoding matrix in a codebook according to the wideband PMI or the sub-band PMI in the PMI information; and transmitting, by the UE, the PUSCH on the uplink BWP according to the precoding matrix.

2. The method of claim 1, wherein determining (401), by the UE, the uplink BWP for transmitting the PUSCH comprises:
determining, by the UE, the uplink BWP for transmitting the PUSCH according to BWP indication information, the DCI used to schedule the PUSCH comprising the BWP indication information.

3. The method of claim 1 or 2, further comprising:
receiving, by the UE, high-layer signaling sent by a network device, the high-layer signaling being used to configure at least one corresponding PUSCH transmission parameter for each uplink BWP of the UE, wherein
determining, by the UE, the at least one PUSCH transmission parameter corresponding to the uplink BWP comprises:
determining, by the UE, the at least one PUSCH transmission parameter corresponding to the uplink BWP according to the high-layer signaling.

4. A user equipment, UE, **characterized in that** the UE comprises a processing unit (601) and a communication unit (602), wherein
the processing unit (601) is configured to determine an uplink Bandwidth Part, BWP, for transmitting a Physical Uplink Shared Channel, PUSCH;
the processing unit (601) is further configured to determine at least one PUSCH transmission parameter corresponding to the uplink BWP; and
the processing unit (601) is further configured to transmit the PUSCH on the uplink BWP through the communication unit (602) according to the at least one PUSCH transmission parameter;
wherein the at least one PUSCH transmission parameter comprises indication information about whether frequency selective precoding is allowed; and the processing unit (601) is further configured to:
determine whether PMI information in Downlink Control Information, DCI, is configured to indicate a wideband PMI or a sub-band PMI according to the indication information about whether frequency selective precoding is allowed; determine precoding matrix in a codebook according to the wideband PMI or the sub-band PMI in the PMI information; and transmit the PUSCH on the uplink BWP according to the precoding matrix.

5. The UE of claim 4, wherein the processing unit (601) is further configured to:
determine the uplink BWP for transmitting the PUSCH according to BWP indication information, the DCI used to schedule the PUSCH comprising the BWP indication information.

6. The UE of claim 4 or 5, wherein the communication unit (602) is further configured to:
receive high-layer signaling sent by a network device, the high-layer signaling being used to configure at least one corresponding PUSCH transmission parameter for each uplink BWP of the UE, and
wherein the processing unit (601) is further configured to:
determine the at least one PUSCH transmission parameter corresponding to the uplink BWP according to the high-layer signaling.

7. A user equipment, UE, comprising one or more processors, one or more memories, one or more transceivers and one or more programs, the one or more programs being stored in the one or more memories and configured to be executed by the one or more processors and the one or more programs comprising instructions for executing the steps in the method of any one of claims 1-3.

8. A computer-readable storage medium, storing a computer program configured for electronic data exchange, the computer program enabling a computer to execute instructions for the steps in the method of any one of claims 1-3.
